Europäisches Patentamt

European Patent Office

Office européen des brevets

(11) Publication number: **0 138 258 B1**

# EUROPEAN PATENT SPECIFICATION

(45) Date of publication of patent specification: **17.06.92**   (51) Int. Cl.⁵: **G09F 3/02**, H01B 7/36, B29C 61/06

(21) Application number: **84201357.5**

(22) Date of filing: **27.07.81**

(60) Publication number of the earlier application in accordance with Art.76 EPC: **0 045 211**

(54) Heat recoverable articles.

(30) Priority: **28.07.80 GB 8024621**

(43) Date of publication of application:
**24.04.85 Bulletin 85/17**

(45) Publication of the grant of the patent:
**17.06.92 Bulletin 92/25**

(84) Designated Contracting States:
**AT BE CH DE FR IT LI NL SE**

(56) References cited:
**FR-A- 1 110 300        FR-A- 2 233 670**
**FR-A- 2 444 392        US-A- 2 832 712**
**US-A- 3 896 524        US-A- 4 198 451**

**ELECTRICAL DESIGN NEWS, vol. 9, no. 5, May 1964, pages 104-107; E.P. WIESNER: "Wire markers replace wiring lists"**

(73) Proprietor: **RAYCHEM LIMITED**
**Rolls House 7, Rolls Buildings Fetter Lane London, EC4 1NL(GB)**

(72) Inventor: **Changani, Pushpkumar**
**11a Dores Road Upper Stratton**
**Swindon Wiltshire(GB)**
Inventor: **Peacock, Donald George**
**Paradise Cottage**
**Kempsford Gloucestershire(GB)**
Inventor: **Roberts, David**
**Stonestack, 10 Crabtree Drive**
**Givons Grove Leeatherhead Surrey(GB)**

(74) Representative: **Dlugosz, Anthony Charles et al**
**Raychem Limited Intellectual Property Law Department Faraday Road Dorcan**
**Swindon, Wiltshire(GB)**

EP 0 138 258 B1

## Description

The present invention concerns heat-recoverable polymeric articles, that is to say, articles the dimensional configuration of which may be made to change by subjecting to heat, and in particular, to such articles for use as identifying markers.

Identifying markers are frequently employed for identifying the components of complicated equipment particularly complex electrical equipment, for example complex wiring systems in aircraft. For example FR-A-2,444,392 describes a wire organizer comprising an array of heat-shrinkable passageways that are connected together and through which electrical wires can be threaded. The passageways may be provided with indicia on the surface thereof in order to distinguish the passageways.

Another such marker system which is described in FR-A-2,233,670 has taken the form of an assembly of heat-recoverable sleeves which may be marked in any manner and which may be slipped over the component to be identified and heat-recovered thereon. Such assembly comprises an elongate spine provided on one side thereof with a plurality of transversely extending spaced apart support bars on each of which is disposed a heat-recoverable marker sleeve. Such an assembly facilitates marking and sequencing of the marker sleeves and if necessary furthermore enables the marker sleeves to be subjected to heat treatment to fix or render permanent the markings on the sleeve without risk of premature heat-recovery.

Whilst such marker sleeve assembly has many attributes, the manufacture thereof is complex. The marker sleeves are manufactured from polymeric tubing which is rendered heat-recoverable by cross-linking the tubing, heating the tubing to a temperature above the crystalline melting point or softening point of the polymeric material, deforming the tube radially outwardly and cooling the tubing in the deformed state.
In use, since the deformed state of the article is heat unstable, application of heat will cause the tubing to revert to the original heat stable configuration. The tubing so produced is cut down into a plurality of short sleeves each of which are then individually disposed on the support bars of the elongate spine and located thereon by slight heat recovery, the sleeves so located still retaining a substantial residual amount of heat recovery.

The present invention has, as its object, the provision of an alternative type of heat-recoverable marker sleeve assembly which is less complex than that hitherto employed.

Accordingly, the present invention provides a sleeve assembly comprising a web of heat-recoverably polymeric material that is bonded to itself or to at least one other polymeric web along a plurality of longitudinally spaced-apart transversely extending seams to define a plurality of open-ended radially inwardly heat-recoverable sleeves disposed in side-by-side relationship, the seams providing lines of weakness to facilitate detachment of individual sleeves, the polymeric material forming the or each web being cross-linkable so that the bonded parts of the web(s) can be cross-linked, and the assembly including a retaining spine extending along an edge of the assembly which, if desired, enables individual marker sleeves to be removed without disturbing the sequence of the remaining sleeves.

The assembly according to the invention may be formed by a process which comprises deforming a fusion bondable web of cross-linkable polymeric material at a temperature below the softening point of the material to render the web heat-recoverable, bonding together, preferably by fusion bonding, parts of the web or parts of the web and at least one other polymeric web to define a plurality of radially inwardly heat-recoverable and separable sleeves in side-by-side relationship, and the assembly may then be cross-linked so as to cross-link the bond-forming parts of the deformed web(s) to each other.

By the expression "fusion bonding" as employed herein is meant a process wherein the materials in the parts to be fused together are caused to flow together, eg. welding by heat, solvent, or ultrasonic or radio frequency energy, preferably with the application of pressure, to form a homogeneous bridge between the parts in the absence of an discernible interface therebetween. Additional material may be present in the bond which is cross-linked to the material of the web(s).

The fusion step may be effected before or after deformation, preferably however after deformation.

The marker sleeves may be provided with indentifying characters or other markings at any stage in the production process, eg. on the polymeric web before or after the bonding step. Alternatively, the sleeves may be produced devoid of identifying markings, these to be provided by the user, eg. by a typing operation.

The assembly may be produced from at least one pair of longitudinally expanded fusion bondable polymeric sheets which are superimposed and welded together laterally thereof at longitudinally spaced apart intervals. The weld seams defining the laterally extending marker sleeves are provided with lines of weakness, eg. they are perforated to facilitate separation of the sleeves.

In order to form the retaining spine, the assembly may be provided with a longitudinally extending line of weakness, the marker sleeves so being bounded by one free edge, the welded seams and said longitudinally extending line of weakness. In such case, said line of weakness may comprise a series of slits, each slit extending across the width of the marker sleeves, the welded seams forming a bridge between the sleeves and the spine. In such case also, one sheet may advantageously be wider than the other of the or each pair of sheets, the spine in such case consisting of the one edge region of the wider sheet.

In such first preferred form, said pair(s) of polymeric sheets may be attached to a non-heat-recoverable support means to restrain heat-recovery of the marker sleeves under heat treatment to fix or render permanent markings on the sleeves. Such support means may comprise a strip to which, or, to each side of which, a pair of polymeric sheets as hereinbefore described may be secured, at least at the extremities thereof.

Alternatively the assembly may be produced from a single longitudinally expanded sheet which is folded laterally thereof at spaced apart intervals and welded laterally along the base of each fold to provide a plurality of spaced apart laterally extending marker sleeves. Preferably in such form also, perforations are provided along the weld seams to facilitate removal of the sleeves. Such form has the advantage that sleeves may be removed at any position in the assembly permitting the assembly to remain otherwise intact.

In another process for the production of the marker assembly, it may be produced from at least one pair of longitudinally expanded fusion bondable polymeric sheets which are superimposed onto at least one side of a non-expanded polymeric support strip said pair of sheets being welded together and to the support strip laterally of the sheets at longitudinally spaced apart intervals. Preferably the weld seams defining the laterally extending sleeves are perforated to facilitate their separation. Such third preferred form has the advantage that sleeves at any position in the assembly may be removed whilst permitting the assembly otherwise to remain intact.

Further, by appropriate choice of support strip material the assembly may be subjected to heat treatment to fix or render permanent the indentifying markings on the sleeves, without causing the sleeves to lose their heat-recovery, eg. by choice of a support strip material that remains semi-rigid at the heat treatment temperature. When a support strip is employed, a pair of expanded polymeric sheets may be welded to each face thereof to provide marker sleeves on both faces.

The assembly may be provided longitudinally thereof with a plurality of indexing slots or apertures adapted to be engageable with the teeth of a sprocket mechanism to be advanceable through a printer, eg. a typewriter, and so facilitate marking.

For example in the case where the assembly is provided with a longitudinally extending exposed spine or support strip, the indexing slots or apertures may be provided in said spine or strip.

The marker assembly may be formed from crystalline or non-crystalline polymers, the softening point, by which is meant the crystalline melting point for crystalline polymers, being selected accordingly as the maximum deformation temperature.

By "fusion bondable" polymeric materials as employed herein is meant not cross-linked to the extent that the material cannot be readily bonded to itself or to another polymeric component by fusing. In general, the level of cross-linking in the polymeric material expressed in terms of gel content (ANSI/ASTM D2765-68) is preferably less than 40%, more preferably less than 20%, particularly less than 5%. When cross-linking in accordance with the process, preferably gel contents of at least 40%, eg. at least 50%, particularly at least 65% are attained.

One advantage of the marker sleeves of the invention is that they are substantially recoverable, eg. recoverable to at least 50% of their maximum extent, at a temperature below the softening point of the polymeric material from which they have been produced, eg. in the range 60°C to the softening point.

Any cross-linkable polymeric material to which the property of dimensional recoverability may be imparted such as those disclosed in UK Specification No. 990,235 may be used to form the articles. Polymers which may be used in the polymeric material include polyolefins such as polyethylene and polypropylene, and ethylene copolymers, for example with propylene, butene, hexene, octene, vinyl acetate or other vinyl esters or methyl or ethyl acrylate, polyamides, polyurethanes, polyvinyl chloride, polyvinylidine fluoride, or other fluorinated polymers or copolymers, eg. Tefzel (trade name - commercially available from Dupont), elastomeric materials such as those disclosed in UK Specification No. 1,010,064 and blends such as those disclosed in UK Specification No. 1,284,082 and 1,294,665, and compositions such as those disclosed in our German patent applications DE-A- 2 815 520 and DE-A- 2 914 014. The polymeric materials can be tailored to suit the intended use by the addition of fillers or other additives, eg. flame retardants, plasticisers, pigments, stabilisers and lubricants.

The polymeric material may be cross-linked by irradiation, for example, by means of an electron beam or by gamma radiation or it may be chemically cross-linked. Whichever cross-linking process is used, it may be advantageous to incorporate one or more occuring agents for example polyunsaturated monomers such as triallyl cyanurate, triallyl isocyanurate, diallyl phthalate, ethylene glycol dimethacrylate, trimethylolpropane trimethacrylate, pentaerythritol tetramethacrylate, allyl methacrylate and vinyl methacrylate. One method of chemical cross-linking that may be used involves grafting an unsaturated hydrolysable silane on the polymer and subjecting the article to moisture during a curing stage, for example, as described in UK Patent Specification Nos. 1,286,460 and 1,357,549.

Any of the techniques conventionally employed for fusing together polymeric materials may be employed in the formation of the marker assembly, eg. radio frequency, ultrasonic or hot bar welding, and pressure may additionally be applied to ensure a satisfactory bond. Furthermore, it is possible to make use of the fusing operation to provide lines of weakness, eg. perforations between the marker sleeves of the assembly. For example, it is possible to use a heating/perforating device such as a welding tool provided with a toothed wheel, if necessary in association with pressure applying means such as a roller.

The wall thickness of the marker sleeves may vary, eg. from 0.01 to 3 mm prior to heat-recovery, preferably from 0.1 to 1 mm.

Specific embodiments of the invention will now be described by way of example with specific reference to the accompanying drawings wherein:

Figure 1     is a schematic side view of a marker sleeve assembly in accordance with a first embodiment of the invention,

Figure 2     shows a section through the assembly of Figure 1,

Figure 3     is a side view of a single marker sleeve detached from the assembly of Figure 1.

Figure 4     is a schematic side view of a marker sleeve assembly in accordance with a second embodiment of the invention,

Figure 5     shows a section through the assembly of Figure 4,

Figure 6     is a schematic side view of a single marker sleeve detached from the assembly of Figure 4,

Figure 7     is a schematic side view of a marker sleeve assembly in accordance with a third embodiment of the invention,

Figure 8     shows a section through the assembly of Figure 7, and

Figure 9     is a side view of a single marker sleeve detached from the assembly of Figure 7.

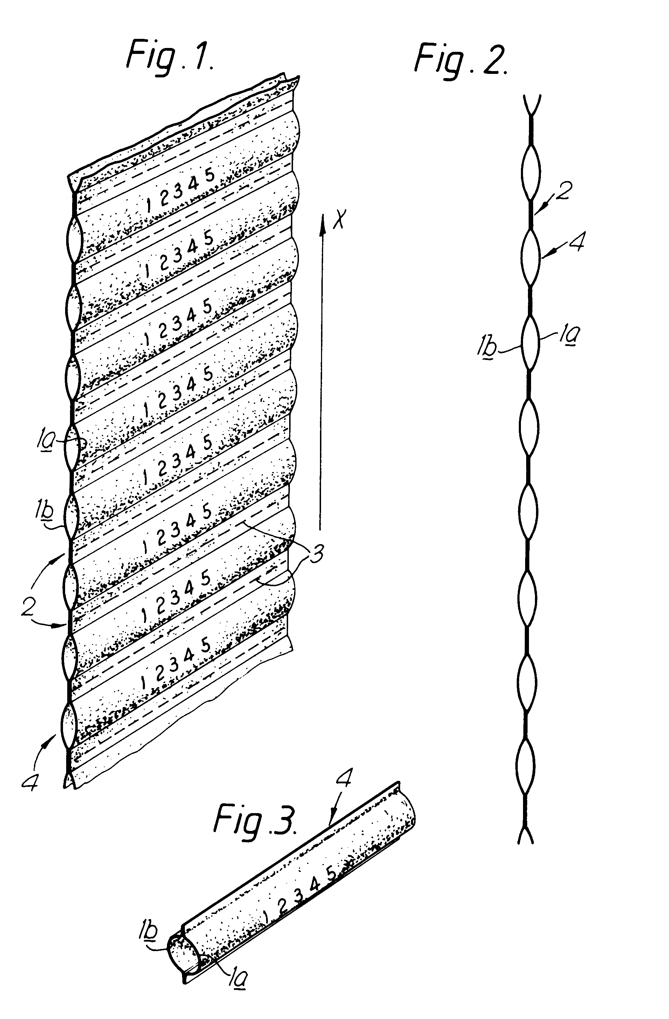

With reference to Figures 1, 2 and 3 the marker sleeve assembly of the first embodiment is produced from a pair of superimposed non-cross-linked polyethylene sheets 1a,1b each of which having been deformed by stretching in a longitudinal direction depicted in Figure 1 by arrow X at a temperature of 100°C and allowed to cool in the deformed condition. The superimposed deformed sheets are welded together laterally thereof with an RF welding tool to produce weld seams 2 and define a plurality of spaced apart marker sleeves 4. The assembly is provided with lines of weakness in the form of perforations 3 disposed along the weld seams 2 to facilitate removal of individual sleeves 4. The assembly may thereafter be irradiated with a 1.5 MeV electron beam at a dosage of 12 Mrads causing cross-linking of the polyethylene. The assembly of blank marker sleeves may be provided with appropriate markings, eg. by use of a normal typewriter.

The resulting marker sleeve assembly is simply produced yet provides a sequenced series of heat-recoverable marker sleeves which may be employed for identifying purposes in manner known per se.

In a modification (not known) of the first embodiment to enable the marker sleeve assemblies when provided with identifying markings, eg. from a typewriter, to be subjected to a heat treatment to fix or render permanent the markings on the sleeves, each assembly is provided with a support means in the form of a polymeric non-heat-recoverable polymeric strip which remains at least semi-rigid at the heat treatment temperature, attached to at least each extremity of the assembly. Such attachment may be achieved by the use of mechanical attachment means, eg. clips, or may be welded to the assembly prior to cross-linking at least to the terminal sleeves of the assembly.

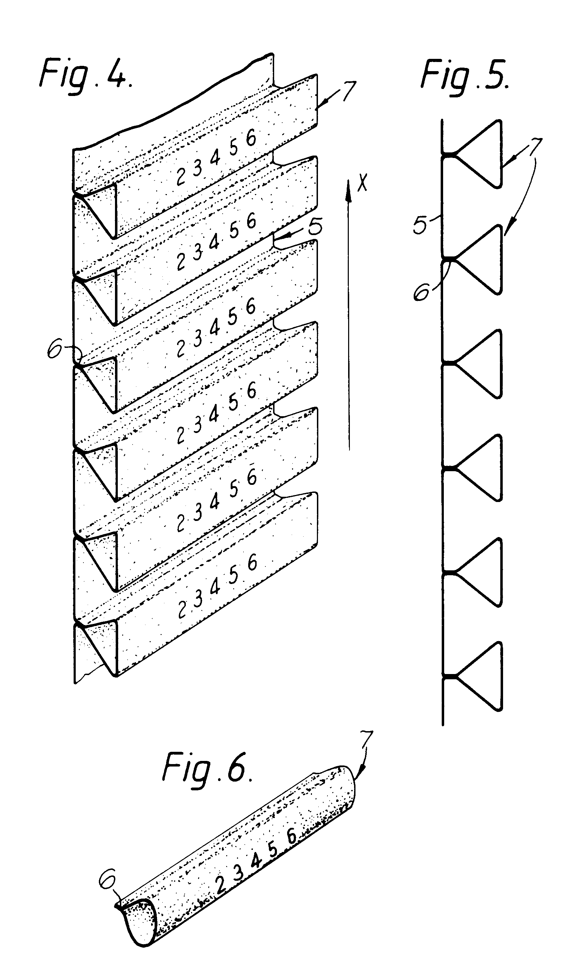

In the second embodiment illustrated in Figures 4, 5 and 6, the assembly is produced from a single sheet 5 of non-crosslinked longitudinally expanded polyethylene sheets, ie. expanded in the direction indicated by arrow X in Figure 4, produced in analogous manner to that described in the first embodiment, the sheet being transversely folded at longitudinally spaced apart intervals and each fold being welded employing an RF welding tool along the base thereof to produce weld seams 6 and thereby define a plurality of interlinked laterally disposed spaced apart sleeves 7. Between each sleeve 7 so produced and the interlinking polyethylene sheet along the weld seams 6 are provided lines of weakness in the form of a line of perforations to permit a tear-off arrangement and facilitate detachment of individual sleeves. The assembly so produced may be subjected to electron irradiation and thereafter be provided with identifying characters in analogous manner to that described in relation to the first embodiment. It is to be noted that the assembly of the second embodiment permits a marker sleeve to be removed out of sequence, ie. from any position in the assembly the assembly otherwise remaining intact.

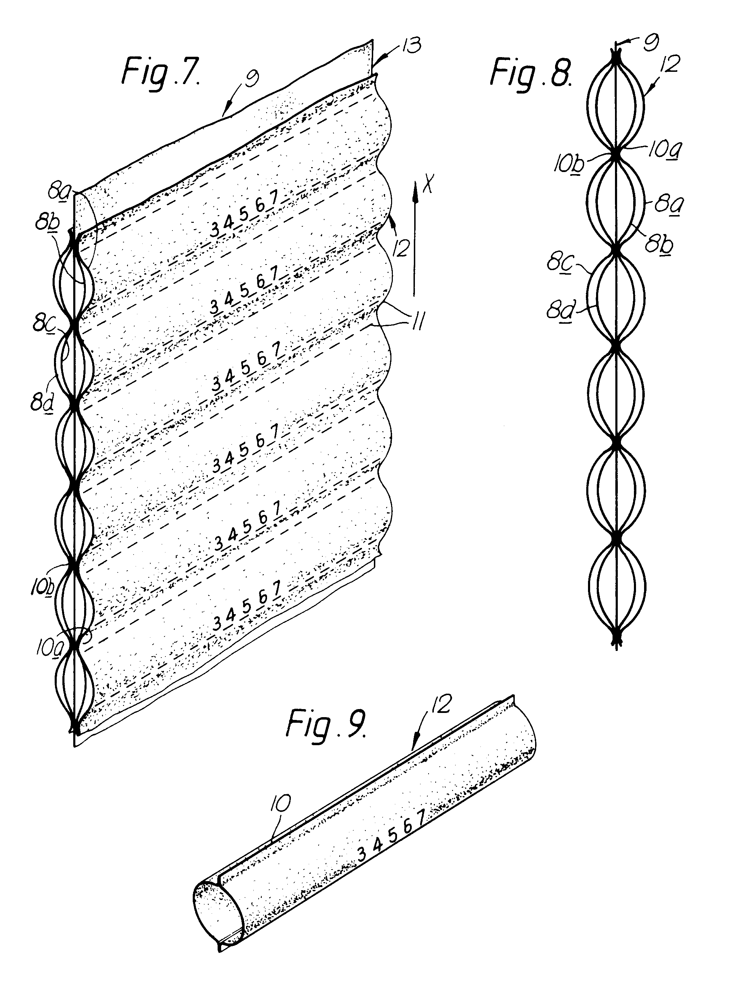

In the third embodiment illustrated in Figures 7, 8 and 9, two pairs of longitudinally expanded polyethylene sheets 8a, and 8b, 8c and 8d (ie. expanded in the direction indicated by arrow X) each produced in accordance with the procedure described in relation to the first embodiment are placed one pair on each side of a non-cross-linked semi-rigid polymeric support strip 9 in stacked relationship and each pair of polyethylene sheets 8a and 8b and 8c and 8d welded together and to each face of the polymeric support strip laterally thereof at spaced apart intervals employing and RF welding tool to produce welded seams 10a and 10b one each side of support strip 9 and to define a plurality of laterally disposed spaced apart marker sleeves 12 on each side of the support strip 9. Each weld seam 10a and 10b is provided with two rows of perforations in region of the seams not directly integral with the support strip to facilitate detachment of the marker sleeves. The relative width of the support strip 9 and polymeric sheets 8 is such that the marker sleeves protrude slightly from one side edge 13 of the support strip to provide a convenient securing tab to facilitate removal of the sleeves. The assembly may then be subjected to electron irradiation as described in relation to the first embodiment, the assembly then being in a condition to accept markings, eg. by way of a typewriter and to undergo heat treatment to render permanent the markings. It should be noted that the polymeric material of the support strip 9 is selected such that it will remain sufficiently rigid at the heat treatment temperature as to prevent premature heat-recovery of the marker sleeves.

It is to be noted that apart from allowing heat treatment to render permanent markings on the sleeves, the assembly also has a high density of marker sleeves and permits any marker sleeve to be detached whilst otherwise remaining intact.

In a modification of the third embodiment (not shown), the support strip extends proud of the marker sleeves on the side thereof opposite to side 13 to expose one edge region thereof.

Along the edge region so exposed is provided a series of slots or apertures which are adapted to be engageable with the teeth of a sprocket mechanism to be advanceable through a printer, e.g. a typewriter and so facilitate marking.

## Claims

1. A sleeve assembly comprising a web (1a,5,8a) of heat-recoverable polymeric material that is bonded to itself or to at least one other polymeric web (1b,8b-8d) along a plurality of longitudinally spaced-apart transversely extending seams (2,6,10a,10b) to define a plurality of open-ended radially inwardly heat-recoverable sleeves (4,7,12) disposed in side-by-side relationship, the seams (2,6,10a,10b) providing lines of weakness to facilitate detachment of individual sleeves, the polymeric material forming the or each web being cross-linkable so that the bonded parts of the web(s) can be cross-linked, and the assembly including a retaining spine extending along an edge of the assembly.

2. An assembly as claimed in claim 1, wherein, the sleeves are attached to a non-heat-recoverable support (9) to restrain heat-recovery of the sleeves under heat-treatment.

3. An assembly as claimed in claim 2, wherein the support (9) is a polymeric strip and the sleeves are bonded thereto at the positions of the sleeve-forming bonds.

4. An assembly as claimed in claim 3 having a plurality of the said sleeves bonded to each surface of the support.

5. An assembly as claimed in claim 1, wherein the sleeves (4,12) are formed by a pair of superimposed longitudinally expanded polymeric sheets (1a,1b,8a-8d).

6. An assembly as claimed in claim 5, wherein one of the sheets is wider than the other so that an edge of the wider sheet provides the retaining spine.

7. An assembly as claimed in any one of claims 1 to 6, wherein indexing slots or apertures are provided in the retaining spine.

8. An assembly as claimed in any one of claims 1 to 7, wherein the sleeves have a wall thickness in the range of from 0.01 to 3mm prior to heat-recovery.

9. An assembly as claimed in claim 8, wherein the sleeves have a wall thickness in the range of from 0.1 to 1mm prior to heat-recovery.

## Revendications

1. Ensemble de manchons comprenant une bande (1a, 5, 8a) en matière polymérique douée de reprise de forme à chaud, qui est liée à elle-même ou à au moins une autre bande polymérique (1b, 8b-8d) suivant plusieurs joints (2, 6, 10a, 10b) s'étendant transversalement, espacés longitudinalement, pour définir plusieurs manchons (4, 7, 12) ouverts aux extrémités, doués de reprise de forme à chaud radialement vers l'intérieur, disposés côte à côte, les joints (2, 6, 10a, 10b) présentant des lignes d'affaiblissement pour faciliter le détachement de manchons individuels, la matière polymérique formant la ou chaque bande pouvant être réticulée afin que les parties liées de la bande ou des bandes puissent être réticulées, et l'ensemble comprenant une épine dorsale de retenue s'étendant le long d'un bord de l'ensemble.

2. Ensemble selon la revendication 1, dans lequel les manchons sont attachés à un support (9) non doué de reprise de forme à chaud pour empêcher une reprise de forme à chaud des manchons sous un traitement thermique.

3. Ensemble selon la revendication 2, dans lequel le support (9) est un ruban polymérique et les manchons sont liés à ce ruban aux positions des liaisons formant les manchons.

4. Ensemble selon la revendication 3, comportant plusieurs desdits manchons liés à chaque surface du support.

5. Ensemble selon la revendication 1, dans lequel les manchons (4, 12) sont formés par deux feuilles polymériques (1a, 1b, 8a-8d), superposées et expansées longitudinalement.

6. Ensemble selon la revendication 5, dans lequel l'une des feuilles est plus large que l'autre afin qu'un bord de la feuille plus large constitue l'épine dorsale de retenue.

7. Ensemble selon l'une quelconque des revendications 1 à 6, dans lequel des encoches ou ouvertures d'indexage sont prévues dans l'épine dorsale de retenue.

8. Ensemble selon l'une quelconque des revendications 1 à 7, dans lequel les manchons ont une épaisseur de paroi dans la plage de 0,01 à 3 mm avant une reprise de forme à chaud.

9. Ensemble selon la revendication 8, dans lequel les manchons ont une épaisseur de paroi dans la plage de 0,1 à 1 mm avant une reprise de forme à chaud.

**Patentansprüche**

1. Hülsenanordnung, umfassend eine Bahn (1a, 5, 8a) aus wärmerückstellbarem Polymermaterial, die mit sich selbst oder mit wenigstens einer weiteren Polymerbahn (1b, 8b bis 8d) entlang einer Vielzahl von in Längsrichtung beabstandeten, quer verlaufenden Nähten (2, 6, 10a, 10b) verbunden ist, um eine Vielzahl von offenendigen, radial nach innen wärmerückstellbaren Hülsen (4, 7, 12) zu bilden, die in einer Anordnung Seite an Seite vorgesehen sind, wobei die Nähte (2, 6, 10a, 10b) Schwächungslinien bilden, um die Abtrennung einzelner Hülsen zu erleichtern, und wobei das Polymermaterial, das die oder jede Bahn bildet, so vernetzbar ist, daß die verbundenen Teile der Bahn(en) vernetzt werden können, und wobei die Anordnung einen Befestigungsrücken aufweist, der sich entlang eines Randes der Anordnung erstreckt.

2. Anordnung nach Anspruch 1, wobei die Hülsen an einem nicht-wärmerückstellbaren Träger (9) befestigt sind, um eine Wärmerückstellung der Hülsen unter Wärmebehandlung zu hemmen.

3. Anordnung nach Anspruch 2, wobei der Träger (9) ein Polymerstreifen ist und die Hülsen damit an den Positionen der Hülsen bildenden Verbindungen verbunden sind.

4. Anordnung nach Anspruch 3, die eine Vielzahl der Hülsen aufweist, die mit jeder Oberfläche des Trägers verbunden sind.

5. Anordnung nach Anspruch 1, wobei die Hülsen (4, 12) von einem Paar von aufeinandergelegten, in Längsrichtung aufgeweiteten polymeren Flächenkörpern (1a, 1b, 8a bis 8d) gebildet sind.

6. Anordnung nach Anspruch 5, wobei einer der Flächenkörper breiter als der andere ist, so daß ein Rand des breiteren Flächenkörpers den Befestigungsrücken bildet.

7. Anordnung nach einem der Ansprüche 1 bis 6, wobei in dem Befestigungsrücken Indexschlitze oder -öffnungen Vorgesehen sind.

8. Anordnung nach einem der Ansprüche 1 bis 7, wobei die Hülsen vor der Wärmerückstellung eine Wandstärke im Bereich von 0,01 bis 3 mm haben.

9. Anordnung nach Anspruch 8, wobei die Hülsen vor der Wärmerückstellung eine Wandstärke im Bereich von 0,1 bis 1 mm haben.

# Fig.1.

# Fig.2.

# Fig.3.

Fig.4.

Fig.5.

Fig.6.

Fig.7.

Fig.8.

Fig.9.